# EUROPEAN PATENT SPECIFICATION

(11) **EP 1 426 204 B1**
(45) Date of publication and mention of the grant of the patent: **10.11.2010**
(21) Application number: 03104475.3
(22) Date of filing: 01.12.2003
(51) Int. Cl.: B60G 9/00, B60G 17/005, F16B 5/02

(54) **A vehicle with an oscillating axle**
Radfahrzeug mit Pendelachse
Véhicule avec essieu oscillant

(30) Priority: 06.12.2002 IT TO20021067
(43) Date of publication of application: 09.06.2004
(73) Proprietor: New Holland Kobelco Construction Machinery S.p.A., 10099 San Mauro Torinese (TO) (IT)
(72) Inventor: Pinto, Massimo, 10023 Chieri (TO) (IT)
(74) Representative: CNH IP Department

(56) References cited:
- EP-A- 0 523 577
- EP-A- 0 603 394
- EP-A- 0 887 213
- EP-A- 1 160 107
- DE-A- 19 622 861
- DE-U- 6 606 345
- GB-A- 977 521
- US-A- 5 813 697

## Description

The present invention relates to a wheeled vehicle, in particular to an earth-moving vehicle or an excavating vehicle, which is provided with a chassis, with an axle that oscillates with respect to the chassis about a longitudinal axis, and with a pair of hydraulic cylinders controlled for blocking oscillation of the axle in some operating conditions of the vehicle.

In known vehicles of the type just described, the two cylinders are coupled to the chassis on side parts set opposite to one another with respect to the longitudinal axis. The cylinders extend in a direction transverse to the axle and comprise respective cylinder housings, each of which is connected to the chassis by means of a corresponding fixing device.

This fixing device is made up of a plate welded to the housing of the cylinder and set resting on a side surface of the chassis, and of a plurality of screws or bolts, which extend through the plate and are screwed into the chassis.

In use, the axle exerts a vertical thrust load on the cylinders that is transferred from the plate to the chassis. In optimal conditions, the torque with which the bolts are tensioned is such that the thrust load is transferred onto the chassis exclusively through the friction present between the side surfaces of the plate and of the chassis, which are coupled together by resting against one another, without exerting shear stress on the bolts.

Conversely however, when the torque with which the bolts are tensioned diminishes with the passage of time and due to the use of the vehicle, the plate tends to transfer the aforesaid thrust load, no longer directly onto the chassis, but onto the side surface of the bolts, thus subjecting the bolts to shear stresses, the occurrence of which being very dangerous in that it reduces the life of the bolts as a result of fatigue phenomena.

The purpose of the present invention is therefore to provide a wheeled vehicle equipped with a chassis, with an axle that oscillates with respect to the chassis, and with a pair of cylinders for blocking the axle, which will enable the problem set forth above to be solved in a simple and economically advantageous way.

According to the present invention a wheeled vehicle is provided comprising:
- a chassis;
- an axle coupled to said chassis and operable to oscillate about a longitudinal axis parallel to a direction of advance of the vehicle;
- a pair of cylinders provided between said axle and said chassis for blocking oscillation of said axle; and
- fixing means associated with each of said cylinders for fixing the cylinders to said chassis; said fixing means comprising a plate carried by said cylinder, and a plurality of connection bolts which extend through said plate.

The vehicle is characterized in that said fixing means further comprise at least one annular rest portion carried in cantilevered fashion by either said chassis or said plate, which surrounds a corresponding said connection bolt and defines a shoulder designed to support said plate in a radial direction with respect to the axis of the connection bolt.

Preferably, said annular rest portion defines a cylindrical shoulder, which is coaxial to said connection screw, forms part of a bushing fixedly connected to said chassis, and engages a cylindrical seat made in said plate and having a diameter closely fitting the diameter of said cylindrical shoulder.

The present invention will now be described further, by way of example, with reference to the accompanying drawings in which :
- Figure 1 is a partial, schematic front view and with parts in cross section, of a preferred embodiment of the wheeled vehicle, equipped with an axle that oscillates with respect to its own chassis and with a pair of cylinders for blocking the axle, according to the present invention; and
- Figure 2 illustrates from above, at an enlarged scale and in exploded view, some details of Figure 1, partially sectioned according to the line II-II of Figure 1.

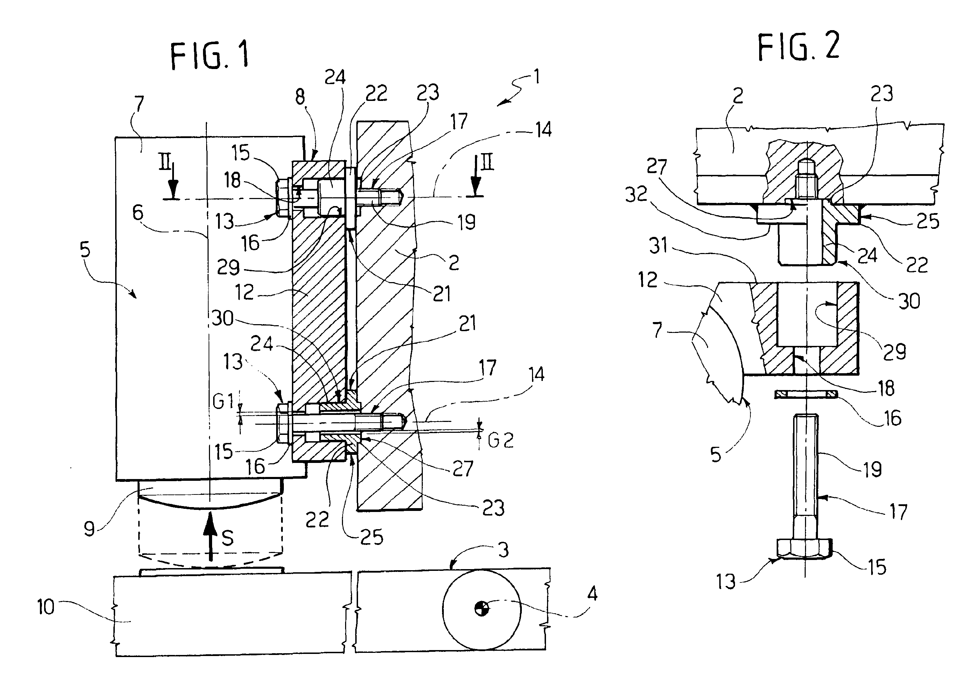

In Figure 1, the reference number 1 designates as a whole a wheeled vehicle, in particular an earth-moving vehicle. The vehicle 1 comprises a chassis 2 (partially illustrated) and a front axle 3 (partially and schematically illustrated), which carries, at its ends, the front wheels (not illustrated). The front axle is coupled to the chassis 2 in a known way (not illustrated) to enable oscillation about a median longitudinal axis 4, orthogonal to the plane of Figure 1 and parallel to a direction of advance of the vehicle 1. The oscillation of the axle 3 with respect to the chassis 2 enables the vehicle 1 to adapt to the irregularities of the terrain during vehicle advance so that all four wheels remain in contact with the ground during movement. The axle 3 can be blocked in a known way (not described in detail herein) by means of two hydraulic cylinders 5, of which only one is illustrated in the attached figures. The cylinders 5 are set on opposite side parts of the chassis 2 and extend along respective vertical axes 6 transverse to the axle 3. Each cylinder comprises a corresponding housing 7, fixed to the chassis 2 by means of a fixing device 8, and a corresponding rod 9, which can slide axially with respect to the housing 7 between a retracted position and an extended position (illustrated by a dashed line).

Each rod 9 is selectively set resting against a corresponding axle shaft 10 of the axle 3 and in use receives from this axle shaft 10 an axial thrust S, which is directed upwards and, in use, is transferred, first from the rod 9 to the housing 7, and then from the latter to the chassis 2 through the device 8.

According to what is illustrated in the attached drawings, the device 8 comprises a plate 12, which is fixedly connected on the one hand to the cylinder housing 7 by means of welding and on the other hand to the chassis 2 by a plurality of screws or bolts 13 (just two of which are illustrated in Figure 1), which extend along respective axes 14 orthogonal to the axes 4 and 6.

Each bolt 13 comprises a respective head 15 axially engaging the plate 12 by interposition of a washer 16, and a corresponding shaft 17, which extends through the washer 16. The shaft 17 engages a corresponding through hole 18 of the plate 12 with radial play G1, and terminates with a threaded stretch 19, which is screwed into the chassis 2.

With particular reference to Figure 2, the device 8 further comprises, for each bolt 13, a corresponding bushing 21, which is coaxial to the bolt 13. The bushing 21 is fitted about the bolt 13 with radial play G2 and comprises an external radial projection 22. The projection 22 is set resting axially, on one side, against the chassis 2 and, on the other side, against the plate 12, and is delimited radially by an external cylindrical surface 25 welded to the chassis 2.

The bushing 21 further comprises two terminal portions 23, 24 which extend in cantilevered fashion from opposite axial parts of the projection 22. The portion 23 defines a centring appendage, which engages a corresponding centring seat 27 provided in the chassis 2 with a tight fitting i.e. substantially without radial play. On the other hand, the portion 24 engages a corresponding cylindrical seat 29, defined by a terminal stretch of the hole 18, the seat 29 having a diameter slightly larger than the external diameter of the portion 24, in such a way as to define a shoulder 30 or external cylindrical surface designed to support the plate 12 in a radial direction with respect to the axis 14 in the absence of a sufficient tensioning torque on the bolt 13.

Indeed, in use, when the vehicle 1 is new, the tensioning torque on each bolt 13 is such as to completely transfer the thrust S from the plate 12 to the chassis 2 through the contact and friction present between a surface 31 axially delimiting the plate 12 and a surface 32 axially delimiting the projection 22 (see Figure 2) and by means of the welding seam between the projection 22 and the chassis 2. Consequently, in this optimal operating condition, the plate 12 does not exert shearing forces, either on the bushings 21 on account of the corresponding sizing of the diameters of the shoulder 30 and of the seat 29, or on the bolts 13 on account of the presence of the play G1 and G2.

However, with the passage of time and as a result of frequent use of the vehicle 1, the tensioning torque of the bolts 13 can diminish, in which case the internal surfaces of the seats 29 come to rest on the respective shoulders 30 of the bushings 21, which start to support the plate 12 in a radial direction with respect to the axes 14.

In this operating condition, the thrust S is transferred from the plate 12 to the chassis 2 not solely through friction but also through a shear stress, which, however, is not exerted on the bolts 13, but on the bushings 21 thanks to the coupling between the portions 24 and the seats 29. The bushings 21 have a diameter considerably larger than the external diameter of the bolts 13, so that the bushings 21 have a resistance to shear stresses which is in general much greater than that of normal bolts. The bolts 13 moreover continue not to be shear stressed once again on account of the presence of the play G1 and G2.

Finally, from the foregoing it will be appreciated that in the vehicle 1 described, the presence of the portions 24 between the plate 12 and the bolts 13 provides a reliable device 8 with a relatively long life, in as much as it prevents shear stresses from being transmitted on the bolts 13.

The fact that the portions 24 surround the bolts 13 coaxially, enables the fixing device 8 to support shear stresses in any radial direction with respect to the axes 14, and not only unidirectional shear stresses directed from below upwards.

The presence and the design of the bushings 21 enable installation of the device 8 in a simple way by appropriate sizing of the diameter of the portions 24. In particular, the projection 22 enables convenient welding of the bushings 21 to the chassis 2.

Finally, from the foregoing it emerges clearly that modifications and variations can be made to the device 8 described herein with reference to the attached figures, without thereby departing from the scope of protection of the present invention.

In particular, the portions 24 could be other than cylindrical and/or could be made integral either with the chassis 2 or with the plate 12.

## Claims

1. A wheeled vehicle (1), comprising:
- a chassis (2);
- an axle (3) coupled to said chassis (2) and operable to oscillate about a longitudinal axis (4) parallel to a direction of advance of the vehicle (1);
- a pair of cylinders (5) provided between said axle (3) and said chassis (2) for blocking oscillation of said axle (3) ; and
- fixing means (8) associated with each of said cylinders (5) for fixing the cylinders (5) to said chassis (2); said fixing means (8) comprising a plate (12) carried by said cylinder (5), and a plurality of connection bolts (13) which extend through said plate (12); and
**characterized in that** said fixing means (8) further comprise at least one annular rest portion (24) carried in cantilevered fashion by either said chassis (2) or said plate (12), which surrounds a corresponding said connection bolt (13) and defines a shoulder (30) designed to support said plate (12) in a radial direction with respect to the axis (14) of the connection bolt (13), and said annular rest portion (24) forms part of a bushing (21).

2. A vehicle according to claim 1, **characterized in that** said annular rest portion (24) defines a cylindrical shoulder (30) coaxial to said connection bolt (13).

3. A vehicle according to claim 1 or 2, **characterized in that** said bushing (21) is fixed to said chassis (2), and engages a cylindrical seat (29) provided in said plate (12); said seat (29) having a diameter slightly larger than the outer diameter of said cylindrical shoulder (30) so as to provide a sliding fitting of said plate (12) over said shoulder (30).

4. A vehicle according to claim 1 or 2, **characterized in that** said bushing (21) is fixed to said plate (12), and engages a cylindrical seat (29) provided in said chassis (2); said seat (29) having a diameter slightly larger than the outer diameter of said cylindrical shoulder (30) so as to provide a sliding fitting of said chassis (2) over said shoulder (30).

5. A vehicle according to claim 3, **characterized in that** said bushing (21) comprises an external annular projection (23) located axially between said chassis (2) and said plate (12) and welded to said chassis (2).

6. A vehicle according to claim 5, **characterized in that** said bushing (21) further comprises a centring portion (23) provided axially opposite to said annular rest portion (24) and engaging a corresponding centring seat (27), provided in said chassis (2).

7. A vehicle according to any of the preceding claims, **characterized in that** said fixing device (8) comprises, for each of said connection bolts (13), a corresponding annular rest portion (24); radial play (G1, G2) being provided between said connection bolts (13) and the respective annular rest portions (24) on the one hand, and between said connection bolts (13) and said plate (12) on the other hand.

## Patentansprüche

1. Radfahrzeug (1) mit:
- einem Fahrgestell (2);
- einer Achse (3), die mit dem Fahrgestell (2) verbunden und für eine Schwingung um eine längs verlaufende Achse (4) parallel zu der Bewegungsrichtung des Fahrzeuges (1) betreibbar ist;
- einem Paar von Zylindern (5), die zwischen der Achse (3) und dem Fahrgestell (2) vorgesehen sind, um die Schwingung der Achse (3) zu unterdrücken; und
- Befestigungseinrichtungen (8), die jedem der Zylinder (5) zugeordnet sind, um die Zylinder (5) an dem Fahrgestell (2) zu befestigen; wobei die Befestigungseinrichtungen (8) eine von dem Zylinder (5) getragene Platte (12) und eine Mehrzahl von Verbindungsschrauben (13) umfassen, die sich durch die Platte (12) hindurch erstrecken; und
**dadurch gekennzeichnet, dass** die Befestigungseinrichtungen (8) weiterhin zumindest einen ringförmigen Auflageteil (24) umfassen, der in freitragender Weise entweder von dem Fahrgestell (2) oder der Platte (12) getragen wird, eine entsprechende der Verbindungsschrauben (13) umgibt und eine Schulter (30) bildet, die zur Abstützung der Platte (12) in einer radialen Richtung bezüglich der Achse (14) der Verbindungsschraube (13) ausgebildet ist, wobei der ringförmige Auflageteil (24) einen Teil einer Büchse (21) bildet.

2. Fahrzeug nach Anspruch 1, **dadurch gekennzeichnet, dass** der ringförmige Auflageteil (24) eine zylindrische Schulter (30) koaxial zu der Befestigungsschraube (13) bildet.

3. Fahrzeug nach Anspruch 1 oder 2, **dadurch gekennzeichnet, dass** die Buchse (21) an dem Fahrgestell (2) befestigt ist und mit einem zylindrischen Sitz (29) in Eingriff steht, der in der Platte (12) vorgesehen ist; wobei der Sitz (29) einen Durchmesser aufweist, der geringfügig größer als der Außendurchmesser der zylindrischen Schulter (30) ist, um einen Gleitsitz der Platte (12) über der Schulter (30) zu schaffen.

4. Fahrzeug nach Anspruch 1 oder 2, **dadurch gekennzeichnet, dass** die Buchse (21) an der Platte (12) befestigt ist und mit einem zylindrischen Sitz (29) in Eingriff steht, der in dem Fahrgestell (2) vorgesehen ist, wobei der Sitz (29) einen geringfügig größeren Durchmesser als der Außendurchmesser der zylindrischen Schulter (30) hat, so dass sich ein Gleitsitz des Fahrgestells (2) über der Schulter (30) ergibt.

5. Fahrzeug nach Anspruch 3, **dadurch gekennzeichnet, dass** die Buchse (21) einen äußeren ringförmigen Vorsprung (23) umfasst, der in Axialrichtung zwischen dem Fahrgestell (2) und der Platte (12) liegt und mit dem Fahrgestell (2) verschweißt ist.

6. Fahrzeug nach Anspruch 5, **dadurch gekennzeichnet, dass** die Buchse (21) weiterhin einen Zentrierabschnitt (23) umfasst, der in Axialrichtung gegenüberliegend zu dem ringförmigen Auflageteil (24) vorgesehen ist und mit einem entsprechenden Zentriersitz (27) in Eingriff steht, der in dem Fahrgestell (2) vorgesehen ist.

7. Fahrzeug nach einem der vorhergehenden Ansprüche, **dadurch gekennzeichnet, dass** die Befestigungseinrichtung (8) für jeden der Verbindungsschrauben (13) einen entsprechenden ringförmigen Auflageteil (24) umfasst; wobei ein Radialspiel (G1, G2) zwischen den Befestigungsschrauben (13) und den jeweiligen ringförmigen Auflageteilen (24) einerseits und zwischen den Befestigungsschrauben (13) und der Platte (12) andererseits vorgesehen ist.

## Revendications

1. Véhicule sur roues (1), comprenant :
- un châssis (2),
- un essieu (3) relié au dit châssis (2) et pouvant fonctionner pour osciller autour d' un axe longitudinal (4) parallèle au sens d' avancement du véhicule (1),
- une paire de vérins (5) prévus entre ledit essieu (3) et ledit châssis (2) pour enrayer l' oscillation du dit essieu (3), et
- des dispositifs de fixation (8) associés à chacun des dits vérins (5) pour fixer les vérins (5) au dit châssis (2), les dits dispositifs de fixation (8) comprenant un flasque (12) porté par ledit vérin (5) et une pluralité de boulons d' assemblage (13) qui s' étendent au travers de ladite plaque(12), et
**caractérisé en ce que** lesdits dispositifs de fixation (8) comprennent en plus au moins une portion d' appui annulaire (24) portée en porte-à-faux par ledit châssis (2) ou ledit flasque (12), qui entoure un dit boulon d' assemblage correspondant (13) et définit une embase (30) destinée à supporter ledit flasque (12) dans un sens radial par rapport à l' axe (14) du boulon d' assemblage (13), et ladite portion annulaire d' appui (24) forme une partie d' une douille (21).

2. Véhicule selon la revendication 1, **caractérisé en ce que** ladite portion annulaire d' appui (24) définit une embase cylindrique (30) coaxiale par rapport au dit boulon d' assemblage (13).

3. Véhicule selon la revendication 1 ou 2, **caractérisé en ce que** ladite douille (21) est fixée au dit châssis (2) et engage un siège cylindrique (29) prévu dans ledit flasque (12), ledit siège (29) ayant un diamètre légèrement plus grand que le diamètre extérieur de ladite embase cylindrique (30) de façon à fournir un emmanchement glissant du dit flasque (12) sur ladite embase (30).

4. Véhicule selon la revendication 1 ou 2, **caractérisé en ce que** ladite douille (21) est fixée au dit flasque (12) et engage un siège cylindrique (29) prévu dans ledit châssis (2), ledit siège (29) ayant un diamètre légèrement plus grand que le diamètre extérieur de ladite embase cylindrique (30) de façon à fournir un emmanchement glissant du dit châssis (2) sur ladite embase (30).

5. Véhicule selon la revendication 3, **caractérisé en ce que** ladite douille (21) comprend une saillie annulaire extérieure (23) située axialement entre ledit châssis (2) et ledit flasque (12) et soudée au dit châssis (2).

6. Véhicule selon la revendication 5, **caractérisé en ce que** ladite douille (21) comprend en plus une portion de centrage (23) prévue de façon à être axialement opposée à ladite portion annulaire d' appui (24) et engageant un siège de centrage correspondant (27), prévu dans ledit châssis (2).

7. Véhicule selon l' une quelconque des revendications précédentes, **caractérisé en ce que** ledit dispositif de fixation (8) comprend, pour chacun des boulons d' assemblage (13), une portion annulaire d' appui correspondante (24), un jeu radial (Gl, G2) étant prévu entre les dits boulons d' assemblage (13) et les portions annulaires d' appui respectives (24) d' une part, et entre les dits boulons d' assemblage (13) et ledit flasque (12) d' autre part.
